Europäisches Patentamt

European Patent Office

Office européen des brevets

(11) Publication number: **0 043 728**
**A2**

# EUROPEAN PATENT APPLICATION

(21) Application number: **81303083.0**

(22) Date of filing: **06.07.81**

(51) Int. Cl.³: **B 62 D 25/14**

(30) Priority: **08.07.80 GB 8022368**

(43) Date of publication of application: **13.01.82**
**Bulletin 82/2**

(84) Designated Contracting States: **DE FR IT**

(71) Applicant: **TALBOT MOTOR COMPANY LIMITED, Administrative Centre P.O. Box 122A Abbey Road, Whitley, Coventry, CV34GB (GB)**

(72) Inventor: **Wisdom, Ronald David, Flat 2 19 Davenport Road, Coventry West Midlands (GB)**
Inventor: **Le Cornu, Graham Henry, 75 Gleneagles Road, Wyken Coventry West Midlands (GB)**

(74) Representative: **Bayliss, Geoffrey Cyril et al, BOULT, WADE & TENNANT 27 Furnival Street, London EC4A 1PQ (GB)**

(54) **Motor vehicle fascia assemblies.**

(57) A vehicle fascia (10) with an instrument binnacle (29) is disclosed, the fascia having a pair of recesses, one to either side of the centre of the fascia and extending forwardly on to the fascia to receive the binnacle to suit left or right-hand drive vehicles. A storage container (31) can be located in the recess not occupied by the binnacle (29), the recesses facing rearwardly so that a deep storage container may be used and so that the binnacle (29) may be secured to the steering column assembly or to the fascia, as and if desired.

EP 0 043 728 A2

## MOTOR VEHICLE FASCIA ASSEMBLIES

This invention relates to motor vehicle fascia assemblies.

A known form of motor vehicle fascia assembly has a fascia for extending across the vehicle body formed with a shallow recess in an upper surface thereof and an instrument holding binnacle is mountable on the fascia in the shallow recess on either side of the mid-position along the fascia according to whether the fascia is for a left- or right-hand drive version of the vehicle. With this arrangement it is only possible to provide a relatively shallow instrument binnacle which must therefore be relatively long in order to accommodate all the instruments and controls required or the binnacle either projects too far into the sight-line of the driver or the fascia has to be mounted too low down. Also the instrument binnacle does not appear to form part of an integral whole with the fascia.

This invention provides a motor vehicle fascia assembly comprising a fascia having a pair of binnacle receiving positions disposed one on either side of a mid-position along the fascia and an instrument binnacle to be received in one or other of the binnacle receiving positions for either left or right hand drive versions of the vehicle, wherein the binnacle receiving positions are formed by a pair of similar generally rearwardly facing recesses extending into the rearward side of the fascia, the instrument binnacle

0043728

being shaped to engage in one or other of the recesses as appropriate for a left- or right-hand drive version of the vehicle.

Thus, an instrument binnacle can be used which is deeper and shorter than that in the known assembly without the binnacle projecting too far into the sight-line of the driver, and the binnacle may be mounted on the steering column or column support if desired. Also, a deep storage compartment may be provided in the recess which is not occupied by the instrument binnacle.

The following is a description of some embodiments of the invention, reference being made to the accompanying drawings in which:

Figure 1 is a perspective part-exploded view of one embodiment of the invention; and

Figure 2 is a sectional view of part of the embodiment shown in Figure 1 along the line 2-2.

0043728

- 3 -

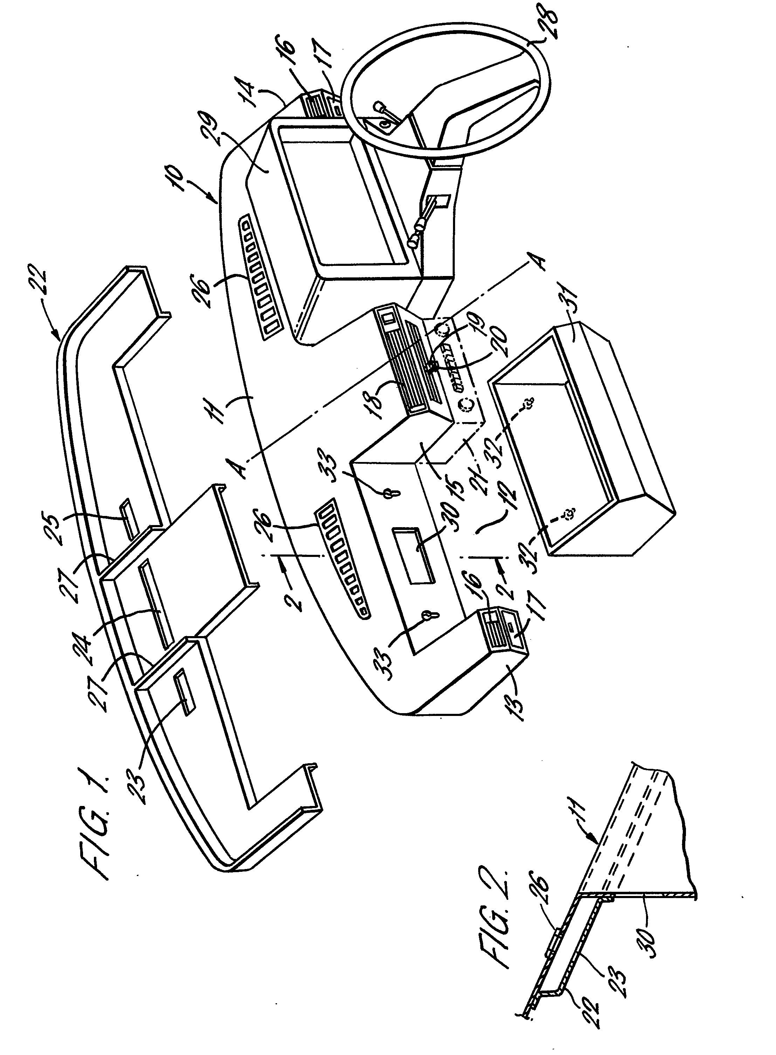

A vehicle fascia panel assembly 10 comprises a plastics moulding 11 extending transversely of the vehicle. The panel 11 is formed such that it is symmetrical about the centre line A - A as shown in Figure 1. A rectangular recess 12 is formed in the panel 11 either side of the centre line A - A to provide rearwardly extending end portions 13, 14 and a central portion 15, the rear faces of which are apertured to receive various control elements or accessories.

A controllable air vent 16 for the passage of warm or cold air is provided on the upper part of each end portion 13, 14 whilst a retractable ashtray 17 is located on the lower part of each end portion below the vent 16. A further larger controllable air vent 18 is located on the upper part of the rear face of the central portion 15 of the fascia panel 11 whilst control levers 19,20 for controlling the distribution and temperature of the heating/ventilating air from the vents are located for transverse horizontal movement in a slotted guide plate mounted on the lower part of the rear face of the central portion 15 below vent 18. Provision may be made for a radio 21 on the underside of the central portion 15 of the fascia as shown in chain-dotted line in Figure 1.

- 4 -          0043728

A further moulded plastics panel 22 is secured to the inside surfaces of the fascia panel 11 by suitable welding or adhesive to provide, with the inside surfaces of the fascia panel, ducting for the passage of warm or cold air from a suitable source on the vehicle, through communicating apertures 23, 24, 25 in panel 22 to vent 16, windscreen demisting vents 26, and or vent 18 in panel 11. Two upstanding spaced apart walls 27 are formed in panel 22 to separate apertures 23, 24, 25 and to provide individual ducts communicating with each of the vents 16 and 26 and a further duct communicating with vent 18, the passage and/or temperature of the air passing through the ducts being controlled by valve means (not shown) controlled by the operation of levers 19, 20 on the fascia. Thus warm or cold air can be selectively directed to either the vents 16 and demister ducts 26 or to vent 18 or all.

Referring to Figure 1, a steering wheel 28 is mounted on the end of a steering column (not shown) which is attached to a suitable support bracket (also not shown) secured to the vehicle body panel structure. An instrument binnacle 29 is secured      at its base to the steering column support bracket such that the binnacle is located within recess 12 on that side of the fascia panel 11 with the connections to the various instruments (not shown) passing through the aperture 30 in the recess 12. The other recess on the opposite side of the fascia panel is engaged by a suitably shaped storage container 31 releasably attachable to the fascia panel 11. In Figure 1, the container is shown removed from the recess in the fascia and can be attached thereto by a pair of headed pins 32 protruding forwardly from the container front wall and engaging into keyhole slots 33 in the transversely extending wall of the recess 12. This method of attachment is by way of example only and other suitable methods may be adopted if desired. Similarly, the container 31 as illustrated in Figure 1 is of simple basic form and can be replaced by other forms of containers with or without hinged or removable covers and suitable for a particular specialised function such as for example, a tool kit, liquid container storage, refreshment storage, first aid kit etc. etc.

Means for securing the fascia panel to the vehicle structure are not shown but may comprise any suitable

0043728

- 6 -

arrangement to suit a particular vehicle construction.

Where it may be required, or it is not possible satisfactorily to mount the instrument binnacle directly on to the steering column support, as for example may be the case with rake or axially adjustable steering columns, the binnacle may be mounted on another part of the vehicle, for example, the binnacle may be mounted on a support bracket or brackets secured to the vehicle structure and separate from the steering column, or alternatively, by a combination of the fascia and a suitable support bracket or brackets also not associated with the steering column support.

From the foregoing therefore it can be seen that the invention provides not only a fascia panel which is not affected by whether the vehicle is right hand or left hand drive but also provides a greater degree of flexibility regarding the provision of suitable storage facilities which can be altered to suit a particular requirement.

CLAIMS:

1. A motor vehicle fascia assembly comprising a fascia (11) having a pair of binnacle receiving positions (12) disposed one on either side of a mid-position along the fascia and an instrument binnacle (29) to be received in one or other of the binnacle receiving positions for either left or right hand drive versions of the vehicle, characterised in that the binnacle receiving positions are formed by a pair of similar generally rearwardly facing recesses (12) extending into the rearward side of the fascia (11), the instrument binnacle (29) being shaped to engage in one or other of the recesses (12) as appropriate for a left- or right-hand drive version of the vehicle.

2. An assembly as claimed in Claim 1, characterised in that the fascia (11) is generally E-shaped, as viewed in plan, having a main limb and spaced arms (13,14,15) extending therefrom providing between them the rearwardly facing recesses (12).

3. As assembly as claimed in Claim 1 or 2, characterised in that the binnacle (29) is adapted for mounting on a steering wheel column or steering wheel column support of the vehicle.

4. An assembly as claimed in Claim 1 or 2, characterised in that the binnacle (29) is secured to the fascia (11).

5.  An assembly as claimed in any one of the preceding claims, characterised in that the wall of at least one of the recesses (12) is formed with an aperture (30) through which services to the binnacle (29) may extend.

6.  An assembly as claimed in any one of the preceding claims, characterised in that the fascia (11) comprises a hollow box form providing air ducting for a vehicle ventilation system,  at least one vent (16,18, 26) being provided in the surface of the fascia (11) for outlet of air therefrom to the vehicle passenger compartment.

7.  An assembly as claimed in Claim 6 and in the case where the fascia is generally E-shaped, as viewed in plan, characterised in that vents (16,18,26) are provided at the ends of the arm (13,14,15) of the E and/or in an upper surface of the main limb of the E for outlet of air to the vehicle passenger compartment.

8.  An assembly as claimed in Claim 6 or Claim 7, characterised in that an intermediate partition wall (22) extends throughout the box form spaced below the upper surface of the fascia (11) to define ducts between the partition  and the upper face through which air can pass to the outlet vent or vents (16,18,26) in the fascia.

9. An assembly as claimed in any of the preceding claims, characterised in that an enclosure (31) is provided which is shaped to be located in the recesses (12) not occupied by the binnacle (29).

10. An assembly as claimed in Claim 9, characterised in that the enclosure (31) comprises an upwardly open container.

11. An assembly as claimed in Claim 10, characterised in that a cover is provided for the open top of the container.

12. An assembly as claimed in any one of Claims 9 to 11, characterised in that the enclosure (31) has a pair of projecting headed pins (32) on the side thereof to be presented to the fascia and each recess (12) in the fascia (11) has a pair of keyhole shaped slots (33) to receive the pins (32) and support the container (31) in the recess (12) not occupied by the binnacle (29).

GCB/KST/MY/PC/EA399

0043728

FIG. 1.

FIG. 2.